# EUROPEAN PATENT APPLICATION

(11) **EP 4 756 619 A1**
(43) Date of publication of application: **10.06.2026**
(21) Application number: 25219446.9
(22) Date of filing: 28.11.2025
(51) Int. Cl.: G06F 9/54

(54) **AUTOMOTIVE OPEN SYSTEM ARCHITECTURE AND COMMUNICATION METHOD FOR AUTOMOTIVE OPEN SYSTEM ARCHITECTURE**

(30) Priority: 29.11.2024 CN 202411751051
(71) Applicant: AUMOVIO Germany GmbH, 60488 Frankfurt am Main (DE)
(72) Inventor: Zhang, Wei, Wuhu, Anhui, 241009 (CN)
(74) Representative: Aumovio Corporation

(57) **Abstract**

The present disclosure provides an automotive open system architecture and a communication method for an automotive open system architecture. In a specific implementation solution, the automotive open system architecture includes an application layer and a basic software layer. A data processing module of the basic software layer is communicatively connected to a data communication module and a software component of the application layer respectively, and the data communication module is communicatively connected to a corresponding external device based on a pin of a controller. The data processing module is configured to manage correspondence information between a plurality of pins of the controller and a plurality of external devices. The data processing module is further configured to control, according to a first message containing target external device information and generated by the software component and the correspondence information, the data communication module to communicate with a target external device based on a target pin of the controller, so as to realize read and/or write operations of the software component on the target external device. According to the solution of the present disclosure, the software component does not need to know a communicative connection relationship between the pin of the controller and the external device, and can still implement read and write operations on the target external device.

## Description

### Technical Field

The present disclosure relates to the field of computer technologies, and in particular, to an automotive open system architecture and a communication method based on an automotive open system architecture.

### Background

An AUTomotive Open System Architecture (AUTOSAR) defines a software architecture for controllers. This software architecture separates hardware and software of a device and puts functional model software and software components together.

### Summary of the Invention

The present disclosure provides an automotive open system architecture and a communication method based on an automotive open system architecture, to solve or alleviate one or more technical problems in the related art.

In one aspect, the present disclosure provides an automotive open system architecture, applied to a controller, including:
an application layer, including a software component; and
a basic software layer, including a data communication module and a data processing module, where the data processing module is communicatively connected to the data communication module and the software component respectively, and the data communication module is communicatively connected to a corresponding external device based on a pin of the controller;
where the data processing module is configured to manage correspondence information between a plurality of pins of the controller and a plurality of external devices, the data processing module is further configured to control, according to a first message containing the target external device information generated by the software component and the correspondence information, the data communication module to communicate with a target external device based on a target pin of the controller, so as to realize read and/or write operations of the software component on the target external device, where the plurality of external devices includes the target external device.

In another aspect, the present disclosure provides a communication method based on an automotive open system architecture, including:
obtaining, by a data processing module of a basic software layer, target external device information according to a first message sent by a software component of an application layer, where the target external device information is used to represent a target external device to which a controller is communicatively connected;
determining, by the data processing module, a target pin of the controller according to correspondence information and the target external device information, where the correspondence information is used to represent communicative connection relationships between a plurality of pins of the controller and a plurality of external devices, the plurality of external devices including the target external device; and
controlling, by the data processing module according to the first message, a data communication module of the basic software layer to communicate with the target external device based on the target pin, so as to enable the software component to perform read and/or write operations on the target external device.

In another aspect, the present disclosure provides a communication device based on an automotive open system architecture, including:
a first module configured to obtain, by a data processing module of a basic software layer, target external device information according to a first message sent by a software component of an application layer, where the target external device information is used to represent a target external device to which a controller is communicatively connected;
a second module configured to determine, by the data processing module, a target pin of the controller according to correspondence information and the target external device information, where the correspondence information is used to represent communicative connection relationships between a plurality of pins of the controller and a plurality of external devices, the plurality of external devices including the target external device; and
a third module configured to determine, by the data processing module according to the first message, a data communication module of the basic software layer to communicate with the target external device based on the target pin, so as to enable the software component to perform read and/or write operations on the target external device.

In another aspect, the present disclosure provides an electronic device, including:
at least one processor; and
a memory communicatively connected to the at least one processor. Here,
the memory stores instructions executable by the at least one processor, and the instructions, when executed by the at least one processor, enable the at least one processor to perform the method according to any one of embodiments in the present disclosure.

In another aspect, the present disclosure provides a non-transitory computer-readable storage medium storing computer instructions, where the computer instructions are used to cause the computer to perform the method according to any one of embodiments in the present disclosure.

In another aspect, the present disclosure provides a computer program product including a computer program, where the computer program, when executed by a processor, implements the method according to any one of embodiments in the present disclosure.

According to the solution of the present disclosure, the software component does not need to know a communicative connection relationship between the pin of the controller and the external device, and can still implement read and write operations on the target external device.

It should be understood that the content described in this section is neither intended to identify key or essential features of the embodiments of the present disclosure, nor intended to limit the scope of the present disclosure. Other features of the present disclosure will become readily understood from the following description.

### Brief Description of the Drawings

In accompanying drawings, unless otherwise specified, the same reference numerals refer to the same or similar parts or elements throughout a plurality of drawings. These drawings are not necessarily drawn to scale. It should be understood that these drawings depict only some of the implementations provided in accordance with the present disclosure and are not to be considered limiting of the scope of the present disclosure.
FIG. 1 is a schematic diagram of an automotive open system architecture according to an embodiment of the present disclosure.
FIG. 2 is a schematic diagram of a basic software layer of an automotive open system architecture according to an embodiment of the present disclosure.
FIG. 3 is a schematic flowchart of a communication method based on an automotive open system architecture according to an embodiment of the present disclosure.
FIG. 4 is a schematic diagram of a communication device based on an automotive open system architecture according to an embodiment of the present disclosure.
FIG. 5 is a block diagram of an electronic device configured to implement a communication method based on an automotive open system architecture according to an embodiment of the present invention.

### Detailed Description

The present disclosure will be described in further detail below with reference to the accompanying drawings. The same or similar reference numerals in the drawings represent elements having the same or similar functions. While the various aspects of the embodiments are presented in drawings, the drawings are not necessarily drawn to scale unless specifically indicated.

Furthermore, in order to better illustrate the present disclosure, numerous specific details are given in the following detailed description. It should be understood by those skilled in the art that the present disclosure can be implemented without certain of the specific details. In some instances, methods, means, elements, circuits, and the like well-known to those skilled in the art are not described in detail in order to highlight the main points of the present disclosure.

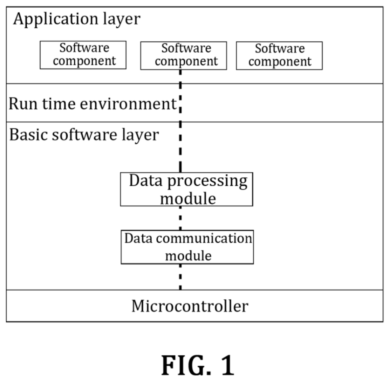

As shown in FIG. 1, an embodiment of the present disclosure provides an automotive open system architecture, applied to a controller, including:
an application layer, including a software component; and
a basic software layer, including a data communication module and a data processing module, where the data processing module is communicatively connected to the data communication module and the software component respectively, and the data communication module is communicatively connected to a corresponding external device based on a pin of the controller;
where the data processing module is configured to manage correspondence information between a plurality of pins of the controller and a plurality of external devices, the data processing module is further configured to control, according to a first message containing target external device information generated by the software component and the correspondence information, the data communication module to communicate with a target external device based on a target pin of the controller, so as to realize read and/or write operations of the software component on the target external device, where the plurality of external devices includes the target external device.

According to the embodiment of the present disclosure, it should be noted that:
The automotive open system architecture according to the embodiment of the present disclosure can be understood as being based on an existing AUTOSAR software architecture and encapsulating new functional modules in a basic software layer. Specifically, the AUTOSAR software architecture is abstracted into four layers including, from top to bottom, an Application Layer, a Run Time Environment (RTE), a basic software (BSW) layer, and a Microcontroller. The application layer contains several Software Components (SWCs). The run time environment is located between the application layer and the basic software layer. It implements a virtual functional bus on a specific electronic control unit (ECU) and provides standardized basic software and communication interfaces for software components in the application layer. The structure of the basic software layer mainly consists of four parts, namely a Microcontroller Abstraction Layer (MCAL), an Electronic Control Unit Abstraction Layer (ECU Abstraction Layer), a Services Layer, and Complex Drivers. The ECU abstraction layer mainly includes four parts: Onboard Device Abstraction, Memory Hardware Abstraction, Communication Hardware Abstraction, and Input/output (I/O) Hardware Abstraction. The microcontroller abstraction layer can be divided into four parts: Microcontroller Drivers, Memory Drivers, Communication Drivers, and I/O Drivers. Each part is composed of specific driver modules corresponding to microcontroller hardware.

The data processing module and the data communication module are encapsulated in the I/O hardware abstraction of the ECU abstraction layer of the basic software layer. The data communication module communicates with the target external device based on the target pin of the controller through the I/O driver of the microcontroller abstraction layer.

The data processing module is an upper-layer module of the data communication module. The software component can call the data processing module based on the run time environment, and the data processing module can call the data communication module.

The controller can be understood as a microcontroller in the automotive open system architecture. The plurality of pins of the controller can be understood as a plurality of pins of the microcontroller. The target pin of the controller can be understood as at least one pin among the plurality of pins of the microcontroller.

The number of software components included in the application layer is not specifically limited here and can be configured according to the external devices connected to the plurality of pins of the microcontroller. For example, the software components may include a temperature management module, a brightness management module, a power control module, a fan management module, a communication module, a diagnostic module, an error code processing module, and the like. Each software component can communicate with at least one pin of the controller through the basic software layer.

The external device may be understood as any device that is communicatively connected to the pin of the controller. For example, when the controller is mounted on a vehicle, the external device may be a sensor, a switch, a voltage detection device, a fan, a backlight, a domain controller, or the like.

The target external device information included in the first information is used to represent a specific external device with which the software component needs to communicate. In addition to the target external device information, the first information may further include a read operation instruction for obtaining required information (signal) from the target external device through the data processing module and the data communication module. In addition to the target external device information, the first information may further include a write operation instruction for sending information (signal) to the target external device through the data processing module and the data communication module, enabling the target external device to perform a corresponding operation. It should be noted that the first information does not contain pin information of the controller, that is, the software component only needs to inform the data processing module of the target external device to which it needs to communicate, and does not need to pay attention to which specific pin of the controller the target external device is connected to. The specific pin to be called to realize communication between the software component and the target external device is determined by the data processing module, which then calls the corresponding data communication module downward to call the pin to realize communication with the target external device.

The correspondence information is stored in the data processing module. The data processing module can know the external device correspondingly connected to each pin of the controller through the correspondence information. Therefore, when the first information sent by the software component is received, the target pin connected to the target external device corresponding to the target external device information can be filtered out using the correspondence information according to the target external device information, and the data communication module can be further called to communicate with the target external device using the target pin.

According to the technology of the embodiment of the present disclosure, the basic software layer encapsulates the data processing module that manages the correspondences between the pins of the controller and the external devices, and therefore, when the software component of the application layer communicates with the external device, the software component can communicate with the external device without knowing, through the corresponding circuit diagram, the specific information of the pin of the controller to which the external device is connected, thereby improving communication efficiency. In addition, the data processing module is encapsulated in the basic software layer and determines the pins of the controller used by communication of the software components. Therefore, during development of the software component, there is no need to configure query of pin information when generating the first message and encapsulation of the pin information into the first message, and it is only necessary to include the information of the external device requiring communication in the first message.

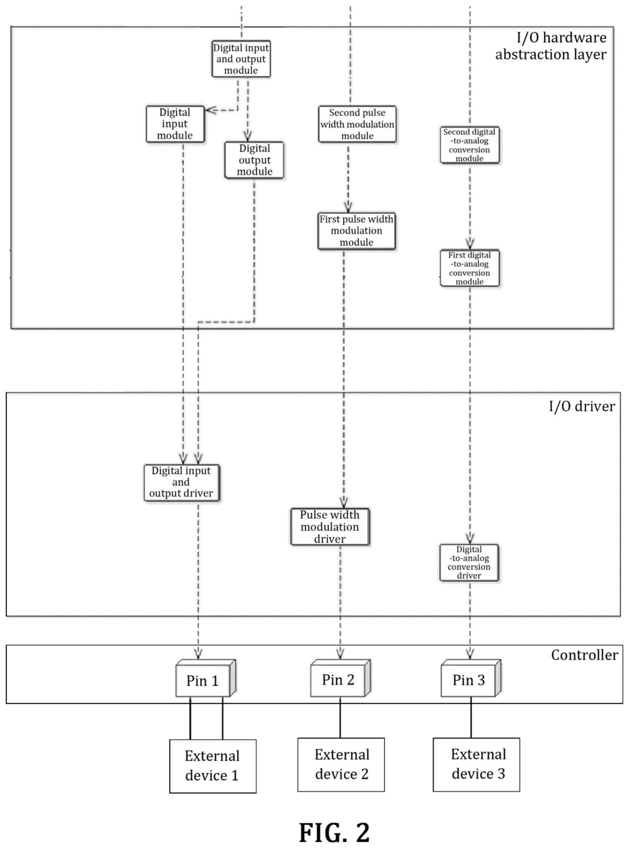

In an implementation, as shown in FIG. 2, the data communication module includes a digital input module and a digital output module, the data processing module includes a digital input and output module, and the digital input and output module is communicatively connected to the digital input module and the digital output module respectively.

The digital input and output module is configured to send a second message containing target pin information of the controller to the digital input module and/or the digital output module according to the first message and the correspondence information. The digital input module and/or the digital output module is configured to perform read and/or write operations on the corresponding target external device based on the target pin corresponding to the controller and according to the second message.

According to the embodiment of the present disclosure, it should be noted that:
The digital input module is configured to obtain a value of a corresponding communicatively connected external device for a Digital input type pin of the controller.

The digital output module is configured to obtain a value of a corresponding communicatively connected external device for a Digital output type pin of the controller.

The digital input and output module is configured to send the value obtained by the digital input module from the external device and the value obtained by the digital output module from the external device to the software component to realize a read operation. It is also configured to send the second message to the digital input module and/or the digital output module based on the first message to realize a write operation.

The correspondence information stored in the digital input and output module includes the communication relationship between the digital input type pin and the external device, as well as the communication relationship between the digital output type pin and the external device. Therefore, based on the target external device information in the first message, the target pin to be called can be filtered out, and the digital input module or digital output module is called to communicate with the external device through the target pin.

According to the technology of the embodiment of the present disclosure, the basic software layer encapsulates the digital input and output module that manages the correspondence between the digital input/digital output pin of the controller and the external device, and therefore, when the software component of the application layer communicates with the external device, the software component can communicate with the corresponding external device based on the digital input/digital output pin of the controller without knowing, through the corresponding circuit diagram, the specific information of the pin of the controller to which the external device is connected, thereby improving the communication efficiency.

In an implementation, as shown in FIG. 2, the data communication module includes a first pulse width modulation module, the data processing module includes a second pulse width modulation module, and the second pulse width modulation module is communicatively connected to the first pulse width modulation module.

The second pulse width modulation module is configured to send a second message containing target pin information of the controller to the first pulse width modulation module according to the first message and the correspondence information. The first pulse width modulation module is configured to perform read and/or write operations on the corresponding target external device based on the target pin corresponding to the controller and according to the second message.

According to the embodiment of the present disclosure, it should be noted that:
The first pulse width modulation module is configured to obtain a Pulse Width Modulation (PWM) value of the corresponding communicatively connected external device for a PWM type pin of the controller.

The second pulse width modulation module is configured to send the PWM value obtained by the first pulse width modulation module to the software component to realize a read operation. It is further configured to send the second message to the first pulse width modulation module based on the first message to realize a write operation.

The correspondence information stored in the second pulse width modulation module includes a communication relationship between the PWM type pin and the external device. Therefore, based on the target external device information in the first message, the target pin to be called can be filtered out, and the first pulse width modulation module is called to communicate with the external device through the target pin.

According to the technology of the embodiment of the present disclosure, the basic software layer encapsulates the first pulse width modulation module that manages the correspondence between the PWM type pin of the controller and the external device, and therefore, when the software component of the application layer communicates with the external device, the software component can communicate with the corresponding external device based on the PWM type pin of the controller without knowing, through the corresponding circuit diagram, the specific information of the pin of the controller to which the external device is connected, thereby improving the communication efficiency.

In an implementation, as shown in FIG. 2, the data communication module includes a first digital-to-analog conversion module, the data processing module includes a second digital-to-analog conversion module, and the second digital-to-analog conversion module is communicatively connected to the first digital-to-analog conversion module.

The second digital-to-analog conversion module is configured to send a second message containing the target pin information of the controller to the first digital conversion module according to the first message and the correspondence information. The first digital-to-analog conversion module is configured to perform read and/or write operations on the corresponding target external device based on the target pin corresponding to the controller and according to the second message.

According to the embodiment of the present disclosure, it should be noted that:
The first digital-to-analog conversion module is configured to obtain an Analog to Digital Converter (ADC) value of a corresponding communicatively connected external device for an ADC type pin of the controller.

The second digital-to-analog conversion module is configured to send the ADC value obtained by the first digital-to-analog conversion module to the software component to realize a read operation. It is further configured to send the second message to the first pulse width modulation module based on the first message to realize a write operation.

The correspondence information stored in the second digital-to-analog conversion module includes a communication relationship between the ADC type pin and the external device. Therefore, based on the target external device information in the first message, the target pin to be called can be filtered out, and the first digital-to-analog conversion module is called to communicate with the external device through the target pin.

According to the technology of the embodiment of the present disclosure, the basic software layer encapsulates the first pulse width modulation module that manages the correspondence between the ADC type pin of the controller and the external device, and therefore, when the software component of the application layer communicates with the external device, the software component can communicate with the corresponding external device based on the ADC type pin of the controller without knowing, through the corresponding circuit diagram, the specific information of the pin of the controller to which the external device is connected, thereby improving the communication efficiency.

In an implementation, the data processing module is further configured to perform a physical value conversion operation on the target external device information obtained from the data communication module, and send the information after the physical value conversion to the software component.

According to the embodiment of the present disclosure, it should be noted that:
The physical value conversion can be understood as that the value obtained by the data communication module is not a value capable of being directly used by the software component, so it needs to be converted through an algorithm. For example, the ADC value of the external device obtained by the data communication module through the pin is X, and the software component needs to know a voltage value of the external device. Conversion needs to be performed through an algorithm V(voltage) = k*X+b to obtain an actual voltage value. In the formula, k and b are preset constants.

According to the technology of the embodiment of the present disclosure, the function of physical value conversion is encapsulated in the data processing module, and therefore, various software components of the data processing module can be called without the need of configuring the function of physical value conversion, thereby improving work efficiency of the software components and avoiding repeated development of the same physical value conversion function by the various software components. In addition, when it is necessary to adjust the physical value conversion algorithm, it is only necessary to modify the algorithm in the data processing module so that the various software components can obtain, through the data processing module, the value obtained by the new algorithm, thereby improving porting convenience of the software components at the application layer. That is, when encapsulating a new software component at the application layer, there is no need to configure a calculation logic of a new physical value conversion algorithm for the software component.

In an implementation, the data processing module is further configured to store the information after the physical value conversion, so that when another software component in the application layer generates a third message corresponding to the first message, the data processing module sends the locally stored information after the physical value conversion corresponding to the first message to the other software component.

According to the technology of the embodiment of the present disclosure, the obtaining of the same type of information for the same pin does not need to be repeated, and the information locally stored in the data processing module can be directly obtained, thereby improving the communication efficiency.

In one example, the software components in the application layer include a brightness management module, a temperature management module, a power control module, and a fan management module. These modules all require voltage values, and if no second digital-to-analog conversion module exists, they need to know pin information before they can obtain the ADC value through the target pin. After obtaining the ADC value, these software components must perform a physical value conversion themselves to obtain the voltage value. This part of the work is obviously repetitive, and developers of the software components in the application layer, including the brightness management module, the temperature management module, the power control module, and the fan management module, are usually not the same person. Each developer must know the communication relationships between the pins of the controller and external devices, as well as conversion relationships. During later maintenance, if the conversion relationship algorithm for physical value conversion is changed, each software component must modify this conversion relationship algorithm. If a software component does not modify the algorithm, a system bug (error) will occur. The above problems can be solved if the second digital-to-analog conversion module is encapsulated into the basic software layer. The software component does not need to pay attention to pin information and does not need to configure the conversion relationship algorithm for physical value conversion, which effectively solves the development time and improves the communication efficiency of the software component during application.

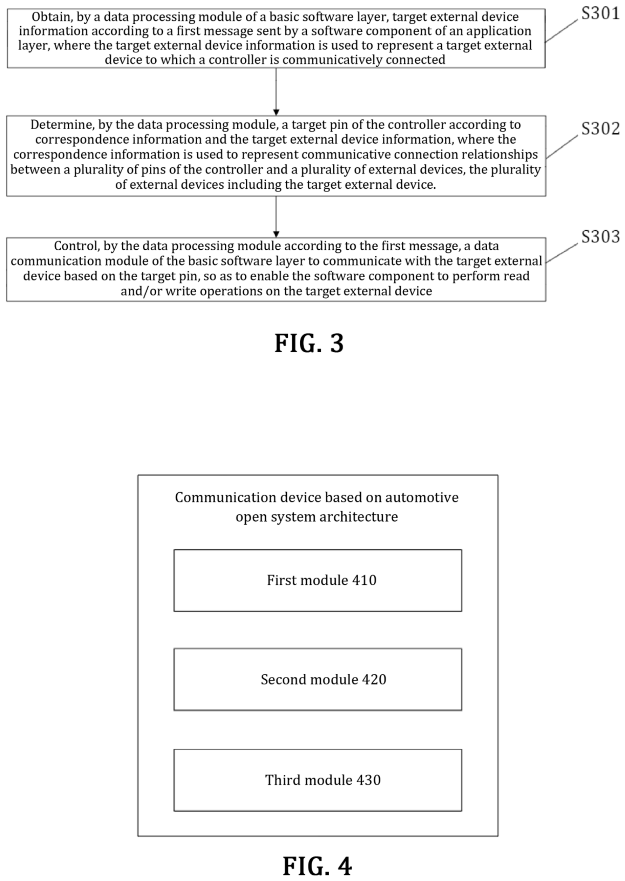

As shown in FIG. 3, an embodiment of the present disclosure provides a communication method based on an automotive open system architecture, which can be applied to the automotive open system architecture according to any embodiment of the present disclosure. The method includes:
Step S301: Obtain, by a data processing module of a basic software layer, target external device information according to a first message sent by a software component of an application layer, where the target external device information is used to represent a target external device to which a controller is communicatively connected.
Step S302: Determine, by the data processing module, a target pin of the controller according to correspondence information and the target external device information, where the correspondence information is used to represent communicative connection relationships between a plurality of pins of the controller and a plurality of external devices, the plurality of external devices including the target external device.
Step S303: Control, by the data processing module according to the first message, a data communication module of the basic software layer to communicate with the target external device based on the target pin, so as to enable the software component to perform read and/or write operations on the target external device.

According to the embodiment of the present disclosure, it should be noted that:
The automotive open system architecture according to the embodiment of the present disclosure can be understood as being based on an existing AUTOSAR software architecture and encapsulating new functional modules in a basic software layer. Specifically, the AUTOSAR software architecture is abstracted into four layers including, from top to bottom, an Application Layer, a Run Time Environment (RTE), a basic software (BSW) layer, and a Microcontroller. The application layer contains several Software Components (SWCs). The run time environment is located between the application layer and the basic software layer. It implements a virtual functional bus on a specific electronic control unit (ECU) and provides standardized basic software and communication interfaces for software components in the application layer. The structure of the basic software layer mainly consists of four parts, namely a Microcontroller Abstraction Layer (MCAL), an Electronic Control Unit Abstraction Layer (ECU Abstraction Layer), a Services Layer, and Complex Drivers. The ECU abstraction layer mainly includes four parts: Onboard Device Abstraction, Memory Hardware Abstraction, Communication Hardware Abstraction, and Input/output (I/O) Hardware Abstraction. The microcontroller abstraction layer can be divided into four parts: Microcontroller Drivers, Memory Drivers, Communication Drivers, and I/O Drivers. Each part is composed of specific driver modules corresponding to microcontroller hardware.

The data processing module and the data communication module are encapsulated in the I/O hardware abstraction of the ECU abstraction layer of the basic software layer. The data communication module communicates with the target external device based on the target pin of the controller through the I/O driver of the microcontroller abstraction layer.

The data processing module is an upper-layer module of the data communication module. The software component can call the data processing module based on the run time environment, and the data processing module can call the data communication module.

The controller can be understood as a microcontroller in the automotive open system architecture. The plurality of pins of the controller can be understood as a plurality of pins of the microcontroller. The target pin of the controller can be understood as at least one pin among the plurality of pins of the microcontroller.

The number of software components included in the application layer is not specifically limited here and can be configured according to the external devices connected to the plurality of pins of the microcontroller. For example, the software components may include a temperature management module, a brightness management module, a power control module, a fan management module, a communication module, a diagnostic module, an error code processing module, and the like. Each software component can communicate with at least one pin of the controller through the basic software layer.

The external device may be understood as any device that is communicatively connected to the pin of the controller. For example, when the controller is mounted on a vehicle, the external device may be a sensor, a switch, a voltage detection device, a fan, a backlight, a domain controller, or the like.

The target external device information included in the first information is used to represent a specific external device with which the software component needs to communicate. In addition to the target external device information, the first information may further include a read operation instruction for obtaining required information (signal) from the target external device through the data processing module and the data communication module. In addition to the target external device information, the first information may further include a write operation instruction for sending information (signal) to the target external device through the data processing module and the data communication module, enabling the target external device to perform a corresponding operation. It should be noted that the first information does not contain pin information of the controller, that is, the software component only needs to inform the data processing module of the target external device to which it needs to communicate, and does not need to pay attention to which specific pin of the controller the target external device is connected to. The specific pin to be called to realize communication between the software component and the target external device is determined by the data processing module, which then calls the corresponding data communication module downward to call the pin to realize communication with the target external device.

The correspondence information is stored in the data processing module. The data processing module can know the external device correspondingly connected to each pin of the controller through the correspondence information. Therefore, when the first information sent by the software component is received, the target pin connected to the target external device corresponding to the target external device information can be filtered out using the correspondence information according to the target external device information, and the data communication module can be further called to communicate with the target external device using the target pin.

According to the technology of the embodiment of the present disclosure, the basic software layer encapsulates the data processing module that manages the correspondences between the pins of the controller and the external devices, and therefore, when the software component of the application layer communicates with the external device, the software component can communicate with the external device without knowing, through the corresponding circuit diagram, the specific information of the pin of the controller to which the external device is connected, thereby improving communication efficiency. In addition, the data processing module is encapsulated in the basic software layer and determines the pins of the controller used by communication of the software components. Therefore, during development of the software component, there is no need to configure query of pin information when generating the first message and encapsulation of the pin information into the first message, and it is only necessary to include the information of the external device requiring communication in the first message.

In an implementation, a communication method based on an automotive open system architecture according to an embodiment of the present disclosure includes step S301 to step S303. The step S303 of controlling, by the data processing module according to the first message, a data communication module of the basic software layer to communicate with the target external device based on the target pin, so as to enable the software component to perform read and/or write operations on the target external device includes:
Step S3031: controlling, by the data processing module when it is determined according to the first message that the software component requires a read operation, the data communication module of the basic software layer to obtain information from the corresponding target external device based on the target pin and send the information to the software component;
   and/or
Step S3032: controlling, by the data processing module when it is determined according to the first message that the software component requires a write operation, the data communication module of the basic software layer to send an instruction in the first message to the corresponding target external device based on the target pin.

In an example, the data communication module includes a digital input module and a digital output module, the data processing module includes a digital input and output module, and the digital input and output module is communicatively connected to the digital input module and the digital output module respectively.

In an example, the data communication module includes a first pulse width modulation module, the data processing module includes a second pulse width modulation module, and the second pulse width modulation module is communicatively connected to the first pulse width modulation module.

In an example, the data communication module includes a first digital-to-analog conversion module, the data processing module includes a second digital-to-analog conversion module, and the second digital-to-analog conversion module is communicatively connected to the first digital-to-analog conversion module.

In an implementation, the step S3031 of controlling, by the data processing module when it is determined according to the first message that the software component requires a read operation, the data communication module of the basic software layer to obtain information from the corresponding target external device based on the target pin and send the information to the software component includes:
Step S30311: controlling, by the data processing module when it is determined according to the first message that the software component requires a read operation, the data communication module of the basic software layer to obtain information from the corresponding target external device based on the target pin; and
Step S30312: performing, by the data processing module, a physical value conversion operation on the information, and sending the information after the physical value conversion to the software component.

In an implementation, the step further includes step S30313:
sending, by the data processing module in response to a third message generated by another software component of the application layer, the locally stored information after the physical value conversion corresponding to the first message to the other software component.

The third message is corresponding to the first message.

The physical value conversion can be understood as that the value obtained by the data communication module is not a value capable of being directly used by the software component, so it needs to be converted through an algorithm. For example, the ADC value of the external device obtained by the data communication module through the pin is X, and the software component needs to know a voltage value of the external device. Conversion needs to be performed through an algorithm V(voltage) = k*X+b to obtain an actual voltage value. In the formula, k and b are preset constants.

According to the technology of the embodiment of the present disclosure, the function of physical value conversion is encapsulated in the data processing module, and therefore, various software components of the data processing module can be called without the need of configuring the function of physical value conversion, thereby improving work efficiency of the software components and avoiding repeated development of the same physical value conversion function by the various software components. In addition, when it is necessary to adjust the physical value conversion algorithm, it is only necessary to modify the algorithm in the data processing module so that the various software components can obtain, through the data processing module, the value obtained by the new algorithm, thereby improving porting convenience of the software components at the application layer. That is, when encapsulating a new software component at the application layer, there is no need to configure a calculation logic of a new physical value conversion algorithm for the software component.

As shown in FIG. 4, an embodiment of the present disclosure provides a communication device based on an automotive open system architecture, including:
a first module 410 configured to obtain, by a data processing module of a basic software layer, target external device information according to a first message sent by a software component of an application layer, where the target external device information is used to represent a target external device to which a controller is communicatively connected;
a second module 420 configured to determine, by the data processing module, a target pin of the controller according to correspondence information and the target external device information, where the correspondence information is used to represent communicative connection relationships between a plurality of pins of the controller and a plurality of external devices, the plurality of external devices including the target external device; and
a third module 430 configured to determine, by the data processing module according to the first message, a data communication module of the basic software layer to communicate with the target external device based on the target pin, so as to enable the software component to perform read and/or write operations on the target external device.

In an implementation, the third module 430 is configured to control, by the data processing module when it is determined according to the first message that the software component requires a read operation, the data communication module of the basic software layer to obtain information from the corresponding target external device based on the target pin and send the information to the software component.

In an implementation, the third module 430 is configured to control, by the data processing module when it is determined according to the first message that the software component requires a write operation, the data communication module of the basic software layer to send an instruction in the first message to the corresponding target external device based on the target pin.

In an implementation, the third module 430 is configured to control, by the data processing module when it is determined according to the first message that the software component requires a read operation, the data communication module of the basic software layer to obtain information from the corresponding target external device based on the target pin.

The data processing module performs a physical value conversion operation on the information, and sends the information after the physical value conversion to the software component.

In an implementation, the third module 430 is configured to send, by the data processing module in response to a third message generated by another software component of the application layer, the locally stored information after the physical value conversion corresponding to the first message to the other software component. The third message is corresponding to the first message.

For the description of specific functions and examples of various modules and submodules of the device in the embodiment of the present disclosure, reference may be made to the relevant description of the corresponding steps in the above method embodiment, which will not be repeated here.

In the technical solutions of the present disclosure, the obtaining, storage, and application of user personal information involved comply with the provisions of relevant laws and regulations and do not violate public order and good morals.

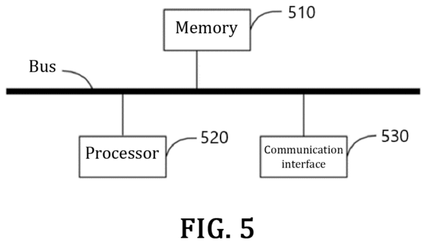

FIG. 5 is a structural block diagram of an electronic device according to an embodiment of the present disclosure. As shown in FIG. 5, the electronic device includes a memory 510 and a processor 520. The memory 510 stores a computer program that can be run on the processor 520. There may be one or a plurality of memories 510 and processors 520. The memory 510 may store one or a plurality of computer programs. When the one or a plurality of computer programs are executed by the electronic device, the electronic device is caused to perform the method provided by the above method embodiment. The electronic device may further include: a communication interface 530 configured to communicate with external devices and perform data exchange transmission.

If the memory 510, the processor 520, and the communication interface 530 are implemented independently, the memory 510, the processor 520, and the communication interface 530 may be connected to each other via a bus and communicate with each other. The bus may be an industry standard architecture (ISA) bus, a peripheral component interconnect (PCI) bus, or an extended industry standard architecture (EISA) bus. The bus can be classified into an address bus, a data bus, a control bus, and the like. For ease of representation, FIG. 5 shows only one thick line, but this does not mean that there is only one bus or one type of bus.

Optionally, during specific implementation, if the memory 510, the processor 520, and the communication interface 530 are integrated on the same chip, the memory 510, the processor 520, and the communication interface 530 may communicate with each other through internal interfaces.

It should be understood that the above-mentioned processor can be a central processing unit (CPU), or another general-purpose processor, a digital signal processor (DSP), an application-specific integrated circuit (ASIC), a field programmable gate array (FPGA) or another programmable logic device, discrete gate or transistor logic device, discrete hardware components, or the like. The general-purpose processor may be a microprocessor or any regular processor or the like. It is worth noting that the processor may be a processor supporting advanced RISC machines (ARM) architecture.

Furthermore, optionally, the above-mentioned memory may include a read-only memory and a random access memory, and may also include a non-volatile random access memory. The memory may be a volatile memory or a nonvolatile memory, or may include both volatile and nonvolatile memories. The nonvolatile memory may include a read-only memory (ROM), a programmable ROM (PROM), an erasable PROM (EPROM), an electrically EPROM (EEPROM), or a flash memory. The volatile memory may include a random access memory (RAM), which acts as an external cache memory. By way of example and not limitation, many forms of RAM are available. For example, a static RAM (SRAM), a dynamic random access memory (DRAM), a synchronous DRAM (SDRAM), a double data rate SDRAM (DDR SDRAM), an enhanced SDRAM (ESDRAM), a synchlink DRAM (SLDRAM), and a direct RAMBUS RAM (DR RAM) are available.

In the above embodiments, all or part of them can be implemented by software, hardware, firmware, or any combination thereof. When implemented using software, all or part of the implementation may be in the form of a computer program product. The computer program product includes one or a plurality of computer instructions. When the computer instructions are loaded and executed on a computer, the processes or functions according to the embodiments of the present disclosure are generated in whole or in part. The computer may be a general-purpose computer, a special purpose computer, a computer network, or another programmable apparatus. The computer instructions may be stored in a computer-readable storage medium or transmitted from one computer-readable storage medium to another computer-readable storage medium. For example, the computer instructions can be transmitted from one website, computer, server, or data center to another website, computer, server, or data center in a wired (such as a coaxial cable, an optical fiber, and a digital subscriber line (DSL)) or wireless (such as infrared, Bluetooth, and microwave) manner. The computer-readable storage medium may be any available medium that is accessible by a computer, or a data storage device such as a server or data center that includes one or a plurality of available media. The available media may be magnetic media (such as floppy disks, hard disks, and magnetic tapes), optical media (such as digital versatile discs (DVDs)), or semiconductor media (such as solid state disks (SSDs)). It is worth noting that the computer-readable storage medium mentioned in the present disclosure may be a non-volatile storage medium, in other words, a non-transitory storage medium.

Those of ordinary skill in the art can understand that all or part of the steps for implementing the above embodiments may be accomplished by hardware, or by a program instructing the relevant hardware. The program may be stored in a computer-readable storage medium, and the storage medium mentioned above may be a read-only memory, a disk, an optical disk, or the like.

In the description of the embodiments of the present disclosure, the description with reference to terms such as "one embodiment", "some embodiments", "example", "specific example", or "some examples" means that the specific features, structures, materials, or characteristics described in combination with the embodiment or example are included in at least one embodiment or example of the present disclosure. Furthermore, the specific features, structures, materials, or characteristics may be combined in any suitable manner in one or more embodiments or examples. Moreover, in a case without mutual contradiction, persons skilled in the art can perform incorporation and combination on different embodiments or examples described in the specification with features of the different embodiments or examples.

In the description of the embodiments of the present disclosure, unless otherwise specified, "/" means or. For example, A/B can mean A or B. Herein, "and/or" is only a way of describing the association relationship of associated objects, indicating that there can be three relationships. For example, A and/or B can mean: A exists alone, A and B exist at the same time, and B exists alone.

In the description of the embodiments of the present disclosure, the terms "first" and "second" are used for descriptive purposes only and should not be understood as indicating or implying relative importance or implicitly indicating the number of the indicated technical features. Therefore, features defined as "first" or "second" may explicitly or implicitly include one or more of the features. In the description of the embodiments of the present disclosure, unless otherwise specified, "a plurality of" means two or more.

The above description is merely an exemplary embodiment of the present disclosure and is not intended to limit the present disclosure. Any modifications, equivalent substitutions, improvements, and the like made within the spirit and principles of the present disclosure shall be included in the scope of protection of the present disclosure.

## Claims

1. An automotive open system architecture, applied to a controller, comprising:
an application layer, comprising a software component; and
a basic software layer, comprising a data communication module and a data processing module, wherein the data processing module is communicatively connected to the data communication module and the software component respectively, and the data communication module is communicatively connected to a corresponding external device based on a pin of the controller;
wherein the data processing module is configured to manage correspondence information between a plurality of pins of the controller and a plurality of external devices, the data processing module is further configured to control, according to a first message containing target external device information and generated by the software component and the correspondence information, the data communication module to communicate with a target external device based on a target pin of the controller, so as to realize read and/or write operations of the software component on the target external device, wherein the plurality of external devices comprises the target external device.

2. The automotive open system architecture according to claim 1, wherein the data communication module comprises a digital input module and a digital output module, the data processing module comprises a digital input and output module, and the digital input and output module is communicatively connected to the digital input module and the digital output module respectively;
wherein the digital input and output module is configured to send a second message containing target pin information of the controller to the digital input module and/or the digital output module according to the first message and the correspondence information; and the digital input module and/or the digital output module is configured to perform read and/or write operations on the corresponding target external device based on the target pin corresponding to the controller and according to the second message.

3. The automotive open system architecture according to claim 1, wherein the data communication module comprises a first pulse width modulation module, the data processing module comprises a second pulse width modulation module, and the second pulse width modulation module is communicatively connected to the first pulse width modulation module;
wherein the second pulse width modulation module is configured to send a second message containing target pin information of the controller to the first pulse width modulation module according to the first message and the correspondence information; and the first pulse width modulation module is configured to perform read and/or write operations on the corresponding target external device based on the target pin corresponding to the controller and according to the second message.

4. The automotive open system architecture according to claim 1, wherein the data communication module comprises a first digital-to-analog conversion module, the data processing module comprises a second digital-to-analog conversion module, and the second digital-to-analog conversion module is communicatively connected to the first digital-to-analog conversion module;
wherein the second digital-to-analog conversion module is configured to send a second message containing target pin information of the controller to the first digital conversion module according to the first message and the correspondence information; and the first digital-to-analog conversion module is configured to perform read and/or write operations on the corresponding target external device based on the target pin corresponding to the controller and according to the second message.

5. The automotive open system architecture according to any one of claims 1 to 4, wherein the data processing module is further configured to perform a physical value conversion operation on the target external device information obtained from the data communication module, and send the information after the physical value conversion to the software component.

6. The automotive open system architecture according to claim 5, wherein the data processing module is further configured to store the information after the physical value conversion, so that when another software component in the application layer generates a third message corresponding to the first message, the data processing module sends the locally stored information after the physical value conversion corresponding to the first message to the other software component.

7. A communication method based on an automotive open system architecture, comprising:
obtaining, by a data processing module of a basic software layer, target external device information according to a first message sent by a software component of an application layer, wherein the target external device information is used to represent a target external device to which a controller is communicatively connected;
determining, by the data processing module, a target pin of the controller according to correspondence information and the target external device information, wherein the correspondence information is used to represent communicative connection relationships between a plurality of pins of the controller and a plurality of external devices, the plurality of external devices comprising the target external device; and
controlling, by the data processing module according to the first message, a data communication module of the basic software layer to communicate with the target external device based on the target pin, so as to enable the software component to perform read and/or write operations on the target external device.

8. The method according to claim 7, wherein the controlling, by the data processing module according to the first message, a data communication module of the basic software layer to communicate with the target external device based on the target pin, so as to enable the software component to perform read and/or write operations on the target external device comprises:
controlling, by the data processing module when it is determined according to the first message that the software component requires a read operation, the data communication module of the basic software layer to obtain information from the corresponding target external device based on the target pin and send the information to the software component;
and/or
controlling, by the data processing module when it is determined according to the first message that the software component requires a write operation, the data communication module of the basic software layer to send an instruction in the first message to the corresponding target external device based on the target pin.

9. The method according to claim 8, wherein the controlling, by the data processing module when it is determined according to the first message that the software component requires a read operation, the data communication module of the basic software layer to obtain information from the corresponding target external device based on the target pin and send the information to the software component comprises:
controlling, by the data processing module when it is determined according to the first message that the software component requires a read operation, the data communication module of the basic software layer to obtain information from the corresponding target external device based on the target pin; and
performing, by the data processing module, a physical value conversion operation on the information, and sending the information after the physical value conversion to the software component.

10. The method according to claim 9, further comprising:
sending, by the data processing module in response to a third message generated by another software component of the application layer, the locally stored information after the physical value conversion corresponding to the first message to the other software component;
wherein the third message is corresponding to the first message.

11. A communication device based on an automotive open system architecture, comprising:
a first module configured to obtain, by a data processing module of a basic software layer, target external device information according to a first message sent by a software component of an application layer, wherein the target external device information is used to represent a target external device to which a controller is communicatively connected;
a second module configured to determine, by the data processing module, a target pin of the controller according to correspondence information and the target external device information, wherein the correspondence information is used to represent communicative connection relationships between a plurality of pins of the controller and a plurality of external devices, the plurality of external devices comprising the target external device; and
a third module configured to control, by the data processing module according to the first message, a data communication module of the basic software layer to communicate with the target external device based on the target pin, so as to enable the software component to perform read and/or write operations on the target external device.

12. An electronic device, comprising:
at least one processor; and
a memory communicatively connected to the at least one processor; wherein
the memory stores instructions executable by the at least one processor, and the instructions, when executed by the at least one processor, enable the at least one processor to perform the method according to any one of claims 7 to 10.

13. A non-transitory computer-readable storage medium storing computer instructions, wherein the computer instructions are used to cause the computer to perform the method according to any one of claims 7 to 10.

14. A computer program product comprising a computer program, wherein the computer program, when executed by a processor, implements the method according to any one of claims 7 to 10.
